# EUROPÄISCHE PATENTANMELDUNG

(11) **EP 3 460 139 A1**
(43) Veröffentlichungstag der Anmeldung: **27.03.2019**
(21) Anmeldenummer: 18159421.9
(22) Anmeldetag: 01.03.2018
(51) Int. Cl.: E04B 7/16, H02S 20/30, F24S 30/428, F24S 30/00, F24S 20/67, F24S 30/425, E04D 13/18

(54) **BEWEGLICHE DACHANORDNUNG**

(30) Priorität: 26.09.2017 DE 102017122222
(71) Anmelder: Mirasol GmbH, 01099 Dresden (DE)
(72) Erfinder:
(74) Vertreter: Gottfried, Hans-Peter

(57) **Zusammenfassung**

Die Erfindung betrifft eine bewegliche Dachanordnung, umfassend wenigstens ein bewegliches Dachteil (2) und Schienenbahnen (10), wobei das bewegliche Dachteil (2) zumindest einen Sektor eines Rads als Teil eines Abrollrads (20) umfasst, wobei jeder Schienenbahn (10) eines der Abrollräder (20) zugeordnet ist und das Abrollrad (20) das bewegliche Dachteil (2) gegen die Schienenbahn (10) abstützt und unterschiedliche Winkelstellungen des beweglichen Dachteils (2) gegenüber der Schienenbahn (10) ermöglicht.

## Beschreibung

Die Erfindung betrifft eine bewegliche Dachanordnung, wie sie für Dächer von Gebäuden zum Einsatz kommen kann, die geöffnet oder geschlossen werden können, insbesondere aber für die Halterung von Solarpaneelen auf Dächern oder in beliebiger Höhe über dem Boden geeignet ist.

Bewegliche Dachanordnungen sind aus dem Stand der Technik bekannt. So beschreibt die Druckschrift DE 27 27 428 A1 ein Bauwerk mit starren und bewegbaren Dachteilen. Dabei ist das bewegbare Dachteil quer zu seiner Längserstreckung und in einer Ebene verschiebbar ausgebildet. Das bewegbare Dachteil besitzt eine dem starren Dachteil mindestens annähernd entsprechende senkrechte Projektionsfläche und das bewegbare Dachteil ist vollständig oberhalb des starren Dachteils angeordnet. Die vorgeschlagene Dachkonstruktion ist vor allem für Hallen vorgesehen, deren Dach geöffnet werden soll. Das bewegbare Dachteil kann dazu ungehindert über das starre Dachteil bewegt werden, so dass sich beide in der Offenstellung des Daches vollständig überdecken.

Das bewegbare Dachteil fährt auf mehreren Rädern, die auf Laufbahnträgern rollen, und soll jeweils durch zwei Motoren angetrieben werden, wobei ein Zahnrad am Motor mit einer Verzahnung oder einer liegenden Kette in Eingriff steht.

Das Längsverschieben der bewegbaren Dachteile ist kraftaufwändig, da die relativ kleinen Räder einen hohen Reibungswiderstand entgegensetzen. Zudem ist die Gefahr groß, dass die bewegbaren Dachteile auf den Laufbahnträgern verkanten. Außerdem lassen sich nur höchstens 50 % der Dachfläche öffnen.

Einen ganz ähnlichen Lösungsweg beschreitet die Druckschrift DE 28 27 975 A1, indem sie einzelne bewegliche Abdeckelemente, die aufeinander schichtbar oder auf dem Bodenniveau oder darunter versenkbar sind, vorschlägt, die mit einer selbsttragende Tragkonstruktion verschiebbar verbunden sind. Zum Öffnen des Daches werden die beweglichen Abdeckelemente dorthin verschoben, wo sie aufeinander schichtbar oder versenkbar sind, so dass das Dach dann vollständig freigegeben ist.

Das Längsverschieben der beweglichen Abdeckelemente ist bei dieser Lösung besonders kraftaufwändig, da neben dem hohen Reibungswiderstand auch noch die Schwerkraft überwunden werden muss, wenn die Abdeckelemente über die gewölbte Tragkonstruktion geschoben werden. Auch hier ist die Gefahr groß, dass die beweglichen Abdeckelemente auf den Laufbahnen verkanten.

Eine weitere Lösung für ein Dach, das geöffnet und geschlossen werden kann, schlägt die Druckschrift DE 39 38 513 A1 vor, bei der ebenfalls feste Dachteile und bewegliche Dachteile vorgesehen sind. Die beweglichen Dachteile sind auf den unteren Abschnitt des beweglichen Daches so aufmontiert, dass jedes bewegliche Dachteil sich längs einer Schienenbahn bewegt, die längs des Randes der Öffnung des entsprechenden festen Dachteiles angeordnet ist. Die Schienenbahn ist gekrümmt und weist einen konstanten Radius auf, damit eine kreisförmige Bewegung des beweglichen Dachteils möglich wird. Dadurch kann das bewegliche Dachteil zwar nicht verkanten, aber dennoch ist das quasi lineare Verschieben der bewegbaren Dachteile sehr kraftaufwändig.

Ganz ähnlich ist das bewegliche Dach nach Druckschrift DE 40 25 711 C2 ausgeführt, wobei jedoch jedes Segment nicht nur durch eine Schienenbahn gestützt ist, sondern zudem an einer im Zentrum der Dachkonstruktion angeordneten vertikalen Achse. Dadurch reduzieren sich die auf der Schienenbahn lastenden Kräfte, entsprechend vermindern sich die Reibkräfte.

Den zuvor beschriebenen Lösungen ist jedoch gemeinsam, dass sie einerseits aufwändig in der Herstellung und der Verwendung sind, andererseits hochbelastete, verschleißanfällige Elemente, z. B. Gelenke, aufweisen und zudem der praktiche Betrieb mit Unsicherheiten behaftet ist.

Aufgabe der vorliegenden Erfindung ist es daher, ein bewegliches Dachelement anzubieten, das verschleißarm, kostengünstig und sicher in seiner Funktion ist.

Die Aufgabe wird gelöst durch eine bewegliche Dachanordnung, umfassend wenigstens ein bewegliches Dachteil und Schienenbahnen. Das bewegliche Dachteil umfasst zumindest einen Sektor eines Rads als Teil eines Abrollrads, wobei bevorzugt jeder Schienenbahn eines der Abrollräder zugeordnet ist. Dabei stützt das Abrollrad das bewegliche Dachteil gegen die Schienenbahn ab. Das Rad muss also nicht vollständig sein wie bei einem Fahrzeug, da das Abrollrad sich nur in einem kleinen Drehwinkel vor uns zurück bewegen muss, um eine Dacheindeckung bzw. Solarpaneele in der gewünschten Weise aus der waagerechten heraus in eine Kippstellung zu bringen.

Das Abrollrad stützt das bewegliche Dachteil und unterschiedliche Winkelstellungen des beweglichen Dachteils gegenüber der Schienenbahn ermöglicht. Es können auch mehrere Abrollräder auf einer Schienenbahn rollen, damit eine im Wesentlichen vollständige Überdeckung der vorgesehen Fläche erfolgen kann.

Die bewegliche Dachanordnung kann auf einem bereits bestehenden Dach installiert werden, um dort Abschattung vorzunehmen. Eine besonders vorteilhafte Ausführungsform sieht als Dacheindeckung Solarpaneele vor, so dass die bewegliche Dachanordnung Solarpaneele trägt. Sie kann in aufgeständerter Bauweise zur Solarnutzung und zugleich zur Abschattung eines Areals genutzt werden, wobei das Problem herabfallender Schneemassen bzw. Schneelast durch die Beweglichkeit einfach gelöst werden kann. Durch Schrägstellung der Dacheindeckung bzw. der Solarpaneele, zumeist bei einer Neigung < 20°, kann der Schnee gezielt entfernt werden. Beispielsweise bei einer Parkfläche kann das in der Zeit erfolgen, in der keine Fahrzeuge geparkt sind. Die verminderte Schneelast wird bei der Bemessung der Standsicherheit der entsprechenden Bauwerke berücksichtigt, so dass 25 - 30 % der Baukosten eingespart werden können.

Die Verstellung der beweglichen Dachanordnung kann mit minimalem Kraftaufwand erfolgen, z. B. mit einem, längeren Hebel von etwa 1,5 m, weil die Abrollbewegung des Abrollrads auf der Schienenbahn kaum durch Reibkräfte behindert ist. Selbst bei Schneelast ist daher eine manuelle Kippbewegung möglich, so dass der der Schnee von den Paneelen rutscht, damit sowohl entlastet als auch die Sonneneinstrahlung auf die Absorberfläche wieder ermöglicht. Auch Schnee oder Eis auf den Schienenbahnen und der linearen Verzahnung stellt kein Problem dar, weil die Linienbelastung des Abrollrades auf dem Schienenkopf der Schienenbahn einen hohen Druck verursacht, der das Eis auf einfache Weise zur Seite drückt.

Als besonders vorteilhaft hat es sich erwiesen, wenn das Abrollrad über eine erste formschlüssige Verbindung gegen eine gleitende Längsbewegung gegenüber der Schienenbahn gesichert ist. Für eine effektive Sicherung ist es nach der bevorzugten Ausführungsform der Erfindung vorgesehen, dass das Abrollrad an zumindest einem Teil seines Umfangs eine Verzahnung aufweist, die so gestaltet ist, dass sie in eine lineare Verzahnung in zumindest einem Abschnitt eines Schienenkopfs der Schienenbahn eingreifen kann. Die Verzahnung am Umfang des Abrollrads ist bevorzugt am Grund eines U-Profils eingebracht.

Als besonders vorteilhaft wird angesehen, dass nach der Erfindung das Abrollrad mittels einer formschlüssigen Verbindung gegen ein Abheben von der Schienenbahn gesichert ist. Dadurch können Abzugskräfte oder sonstige Lasten, wie sie vor allem bei Wind auftreten, wirksam kompensiert und die bewegliche Dachanordnung entsprechend gesichert werden.

Eine Realisierung der Sicherung kann besonders effektiv erreicht werden, wenn das Abrollrad ein rotationssymmetrisches, nach außen, zum Umfang bzw. zur Mantelfläche des zylinderförmigen oder teilzylinderförmigen Abrollrads hin offenes U-förmiges Profil an seinem Umfang aufweist. Das U-förmige Profil umgreift den Schienenkopf und einen den Schienenkopf tragenden Steg der Schienenbahn mit den Schenkeln des U-Profils beidseits, bei vereinfachter Ausgestaltung auch einseitig. Dadurch wird verhindert, dass das Abrollrad axial von dem Schienenkopf abgleiten kann.

Die vereinfachte Ausführung weist anstelle des U-Profils einen einseitigen Kranz auf, der in Zusammenwirken von wenigstens zwei Abrollrädern mit jeweils einem solchen Kranz eine ebenso wirksame axiale Führung und Sicherung ermöglicht.

Der zweite Formschluss, der gegen ein unerwünschtes radiales Abheben sichert, wird durch eine evolventenförmige Ausnehmung in dem Steg der Schienenbahn erreicht, in die ein parallel zur Achse des Abrollrads in einem Schenkel des U-Profils oder dem Kranz angeordneter, in Richtung Schienenbahn abragender Stift eingreift. So gestattet der Stift die abrollende Bewegung des Abrollrads in Form der evolventenförmigen Ausnehmung, verhindert jedoch ein Abheben von der Schienenbahn.

Bei der bevorzugten Ausführungsform ist auch eine Traverse vorgesehen ist, die die Abrollräder miteinander verbindet und sich auf diesen sowie der Dacheindeckung bzw. Solarpaneele abstützt. So können beispielsweise 12 Meter Spannweite erreicht werden. Die erfindungsgemäße Dachanordnung ist gelenkfrei beweglich und veränderbar. Besonders bevorzugt ist das Abrollrad aus Kunststoff oder einem anderen isolierenden Material gefertigt, damit über die Traversen Elektroenergie, die durch die Solarpaneele erzeugt wird, abgeführt werden kann.

Eine alternative Ausführungsform, die vor allem für geneigte Dächer vorgesehen ist, umfasst eine Traverse, die mehrfach geteilt, zumindest aber zweigeteilt ist und bei der die beiden Teile über ein Kreuzgelenk beweglich und zur Aufnahme von Zugkräften miteinander verbunden sind. Damit hängen jeweils zwei bzw. beide Teile der Traverse an jeweils einer Seite des schrägen Daches herunter, wobei sich die Lasten aufheben, da beide Teile der Traverse im Bereich des Dachfirsts verbunden sind.

Die bevorzugte Ausführungsform sieht vor, dass die Dacheindeckung der beweglichen Dachteile mit jeweils einem passiven Dachteil an einer Langseite gelenkig, durch ein Gelenk oder Scharnier, verbunden sind. Das passive Dachteil benötigt dann, vor allem in gestreckter Position, eine geeignete Führung, damit es nicht nur herabhängt. Bei waagerechter Stellung der Dacheindeckung in der Dachebene ist das Dach durch die flachliegende Dacheindeckung und die passiven Dachteile vollständig geschlossen. Bei senkrechter Stellung der Dacheindeckung gegenüber der Dachebene ist das Dach durch die flachliegende Dacheindeckung und die mit diesen verbundenen passiven Dachteile annähernd vollständig geöffnet.

Als vorteilhaft hat es sich erwiesen, wenn beidseits des Abrollrads von einer Ebene des Abrollrads beabstandete Traversenklammern vorgesehen sind, wobei die Traverse quer zu einer Traversenachse auskragende bzw. angeordnete Halteelemente für die Dachteile oder Solarpaneele aufweist. Das Abrollrad, die Traversenklammern, die Halteelemente und die Solarpaneele sind so beschaffen und zueinander angeordnet, dass die Solarpaneele ohne zusätzliche Krafteinwirkung, nur unter Schwerkrafteinwirkung, eine bestimmte bevorzugte Ausrichtung gegenüber der Schienenbahn bzw. der Dachebene einnehmen.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
Fig. 1: schematische in perspektivische Darstellung einer Ausführungsform einer erfindungsgemäßen Dachanordnung;
Fig. 2: schematisch in Seitenansicht ein Detail eines Abschnitts der Schienenbahn der erfindungsgemäßen Dachanordnung;
Fig. 3: eine geschnittene Ansicht einer Ausführungsform eines erfindungsgemäßen Abrollrads;
Fig. 4: eine weitere Ausführungsform in schematischer Seitenansicht der erfindungsgemäßen Dachanordnung für geneigte Dächer und
Fig. 5: eine schematische Darstellung von zwei Bewegungsphasen einer weiteren Ausführungsform der beweglichen Dachanordnung.

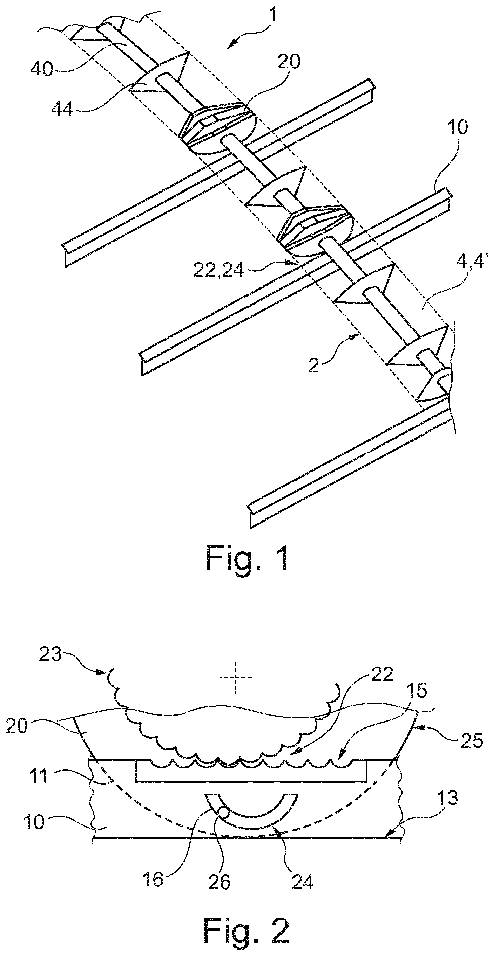

Fig. 1 zeigt schematisch in perspektivischer Darstellung eine Ausführungsform einer erfindungsgemäßen Dachanordnung 1. Ein Dachteil 2, hier umfassend eine Dacheindeckung 4 oder Solarpaneele 4', unsichtbar bzw. durchsichtig dargestellt und daher die Kanten durch Strichlinien markiert, wird beweglich gegenüber einer Schienenbahn 10 bzw. einer hier nicht bezeichneten Dachebene angeordnet. Mit Hilfe von formschlüssigen Eingriffen bzw. beweglichen Verbindungen 22, 24 erfolgt eine Verbindung zwischen der Schienenbahn 10 und dem Abrollrad 20. In der bevorzugten Ausführungsform sind mehrere Schienenbahnen 10 parallel angeordnet, so dass eine Traverse 40 über die Abrollräder 20 mehrfach abgestützt werden kann.

Die Dacheindeckung 4 oder die Solarpaneele 4' werden durch Halteelemente 44 gehalten und sind mit diesen verbunden, wobei die Halteelemente 44 ihrerseits mit der Traverse 40 verbunden, bevorzugt kraftschlüssig verklammert sind. Auch die Abrollräder 20 sind mit der Traverse 40 verbunden, bevorzugt verklammert. Die Dacheindeckung 4 oder die Solarpaneele 4' nehmen selbsttätig eine bestimmte bevorzugte Winkellage gegenüber der Schienenbahn 10 ein, wenn keine Krafteinwirkung erfolgt. Dies wird durch eine bestimmte Anordnung des Schwerpunkts erreicht und bietet Sicherheit bei Ausfall von Möglichkeiten des Antriebs.

Die Erfindung dient beispielsweise der einstellbaren Abschattung von Flächen oder Gebäuden, insbesondere aber der kurzzeitigen Neigung von Solarpaneelen 4', um diese von anhaftendem Schnee auf besonders einfache Weise befreien zu können und damit die vorgesehene Leistung der Solarpaneele 4' bei der solaren Energieerzeugung auch im Winter in kürzester Zeit wiederherstellen zu können. Diese Möglichkeit zur Schneebeseitigung senkt auch die Schneelast, z. B. auf das Gebäude oder Dach, so dass dies bei der Dimensionierung der Statik berücksichtigt werden kann und eine weniger stabile, kostensparende Konstruktion zum Einsatz kommen kann.

Fig. 2 zeigt schematisch in Seitenansicht ein Detail eines Abschnitts der Schienenbahn 10 der erfindungsgemäßen Dachanordnung. Der dargestellte Abschnitt dient der Verbindung mit dem Abrollrad 20, das in der bevorzugten Ausgestaltung mit einer Lauffläche 25 auf dem Schienenfuß 13 abrollt. Dies mindert die Reibkräfte weiter und führt zu einer leichten Beweglichkeit des beweglichen Dachteils gegenüber der Schienenbahn 10.

Für die Verbindung mit dem Abrollrad 20 bzw. dessen formschlüssigen Eingriff weist die Schienenbahn 10 in dem vorgesehenen Bereich eine lineare Verzahnung 15 am Schienenkopf 11 zumindest über die Länge der möglichen Abrollbewegung auf. Die bevorzugte Ausführungsform sieht vor, dass die Verzahnung 15 als gesondertes Bauteil von entsprechender Länge in die Schienenbahn 10 eingefügt wird. Die Verzahnung 15 dient der Vermeidung einer gleitenden Längsbewegung des Abrollrads 20 gegenüber und entlang der Schienenbahn 10 und wirkt dazu mit einer Verzahnung 23 am Abrollrad 20 in der Weise zusammen, dass eine erste formschlüssige Verbindung 22 entsteht.

Damit die erste formschlüssige Verbindung 22 stets in Eingriff bleibt und darüber hinaus auch bei entsprechenden Abzugslasten, zum Beispiel durch Einwirkung von Wind, die Dachanordnung nicht von der Schienenbahn 10 abhebt, ist eine zweite formschlüssige Verbindung 24 vorgesehen. Hierzu greift ein Stift 26 in eine Ausnehmung 16 in dem Steg 12 der Schienenbahn 10 ein. Die Ausnehmung 16 ist dazu evolventenförmig gestaltet, damit die Abrollbewegung des Abrollrads 20 auf der Schienenbahn 10 abgebildet, die Bewegung nicht behindert wird und dennoch in Zusammenwirken mit der Verzahnung 15 bei jeder Position des Abrollrads 20 dieses mit der Schienenbahn 10 verankert und gegen ein Abheben von dieser gesichert ist.

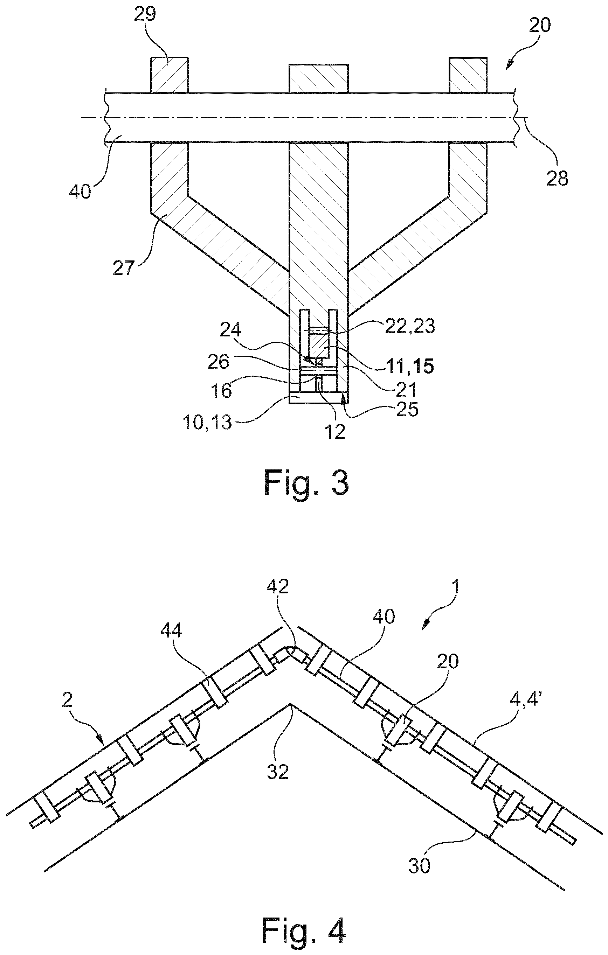

Fig. 3 zeigt in geschnittener Ansicht eine Ausführungsform eines erfindungsgemäßen Abrollrads 20, aufgesetzt auf die Traverse 40. Um das Abrollrad 20 gegenüber der Traverse 40 gegen Kipplasten, also seitliche Belastung in Richtung der Achse 28, zu sichern, sind Stützelemente 27 vorgesehen, die ebenfalls mit der Traverse 40 verbunden, bevorzugt mithilfe von Traversenklammern 29 verklammert sind.

Die Schnittdarstellung macht auch die Funktion der ersten und der zweiten formschlüssigen Verbindung nochmals deutlich. Die bereits aus Fig. 2 bekannte Verzahnung 15 am Schienenkopf 11 der Schienenbahn 10 ist hier im Eingriff mit der Verzahnung 23 am Umfang des Abrollrads 20 zu erkennen, wodurch die formschlüssige Verbindung 22 gebildet wird. Das U-förmige Profil 21 am Umfang des Abrollrads 20 umschließt dabei Schienenkopf 11 und Steg 12 der Schienenbahn 10. Mit seiner Lauffläche 25 rollt das Abrollrad 20 auf dem Schienenfuß 13 ab.

Der Stift 26 ist bevorzugt beidseits im U-Profil 21 gelagert, wobei jedoch auch eine und einseitige Lagerung von der Erfindung umfasst ist, durch die evolventenförmige Ausnehmung 16 im Steg 12 hindurchgeführt. Der Stift 26 ist quer zu der Ausnehmung 16 und der Längsrichtung der Schienenbahn 10 angeordnet. Hierdurch wird die zwiete formschlüssige Verbindung 24 gebildet.

Durch beide Verbindungen 22, 24 wird das Abrollrads 20 beweglich gegenüber der Schienenbahn 10 gelagert und ist dennoch gegen Abheben von der Schienenbahn 10 und auch gegen ein Weggleiten entlang der Schienenbahn 10 zuverlässig gesichert.

Fig. 4 zeigt eine weitere Ausführungsform der erfindungsgemäßen Dachanordnung 1 in schematischer Seitenansicht, wobei die erfindungsgemäße Dachanordnung 1 hier für geneigte Dächer modifiziert wurde. Hierzu sichern sich zwei Traversen 40 im Bereich des Dachfirsts 32 der geneigten Dachebene 30 gegenseitig, indem sie, wiederum beweglich, mittels eines Kreuzgelenks 42 gegen ein Abgleiten von der geneigten Dachebene 30 gesichert sind.

Dadurch können Dacheindeckungen 4, insbesondere aber Solarpaneele 4', auf einer geneigten Dachebene 30 angeordnet und in ihrer Schrägstellung verändert werden.

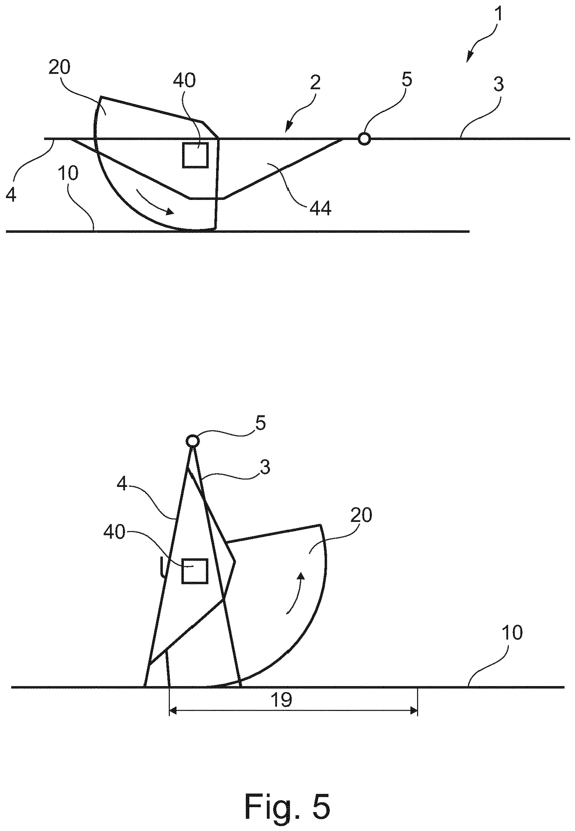

Fig. 5 zeigt in schematische Darstellung von zwei Bewegungsphasen eine weitere Ausführungsform der beweglichen Dachanordnung 1 gemäß der vorliegenden Erfindung. Dabei sind jeweils ein bewegliches Dachteil 2, umfassend eine Dacheindeckung 4, und ein passives Dachteil 3 an einer Langseite gelenkig durch wenigstens ein Gelenk 5 verbunden. Die Dacheindeckung 4 ist, wie bei den zuvor beschriebenen Ausführungsformen auch, über Halteelemente 44 mit der Traverse 40 verbunden, so dass beim Abrollen des Abrollrads 20 auf der Schienenbahn 10 die Winkelstellung des beweglichen Dachteils 2 und mit ihm zusammen die Dacheindeckung 4 oder das Solarpaneel 4' veränderbar ist.

Liegt die Dacheindeckung 4 waagerecht, so trifft dies auch auf das passive Dachteil 3 zu und durch die Dacheindeckung 4 und das Dachteil 3 wird eine maximale Fläche abgedeckt. Rollt das Abrollrad 20 zum anderen Ende des Rollwegs 19, die das Kreissegment des Abrollrads 20 ermöglicht, wird die Dacheindeckung 4 nahezu senkrecht gestellt. Über das Gelenk 5 folgt das passive Dachteil 3 dieser Bewegung. Dadurch ist der zuvor überdeckte Dachbereich nahezu vollständig geöffnet. Diese Ausführungsform der Erfindung kann beispielsweise zum Abschatten benutzt werden oder sogar zum vollständigen Öffnen oder Schließen eines Hallen- oder Gewächshausdaches.

### Bezugszeichenliste

- 1: Dachanordnung
- 2: Dachteil (beweglich),
- 3: Dachteil (passiv)
- 4: Dacheindeckung
- 3', 4': Solarpaneel
- 5: Gelenk
- 10: Schienenbahn
- 11: Schienenkopf
- 12: Steg
- 13: Schienenfuß
- 15: Verzahnung (linear)
- 16: Ausnehmung
- 19: Rollweg
- 20: Abrollrad
- 21: Profil (U-förmig)
- 22: erste formschlüssige Verbindung
- 23: Verzahnung (Umfang)
- 24: zweite formschlüssige Verbindung
- 25: Lauffläche
- 26: Stift
- 27: Stützelement
- 28: Achse
- 29: Traversenklammer
- 30: Dachebene
- 40: Traverse
- 42: Kreuzgelenk
- 44: Haltelement

## Patentansprüche

1. Bewegliche Dachanordnung, umfassend wenigstens ein bewegliches Dachteil und Schienenbahnen, **dadurch gekennzeichnet, dass** das bewegliche Dachteil (2) zumindest einen Sektor eines Rads als Teil eines Abrollrads (20) umfasst, wobei jeder Schienenbahn (10) eines der Abrollräder (20) zugeordnet ist und das Abrollrad (20) das bewegliche Dachteil (2) gegen die Schienenbahn (10) abstützt und unterschiedliche Winkelstellungen des beweglichen Dachteils (2) gegenüber der Schienenbahn (10) ermöglicht.

2. Dachanordnung nach Anspruch 1, wobei das Abrollrad (20) über wenigstens eine erste formschlüssige Verbindung (22) gegen eine gleitende Längsbewegung entlang der Schienenbahn (10) gesichert ist.

3. Dachanordnung nach Anspruch 1 oder 2, wobei das Abrollrad (20) an zumindest einem Teil seines Umfangs eine Verzahnung (23) aufweist, die so gestaltet ist, dass sie in eine lineare Verzahnung (15) auf zumindest einem Abschnitt eines Schienenkopfs (11) der Schienenbahn (10) eingreifen kann.

4. Dachanordnung nach einem der vorherigen Ansprüche, wobei das Abrollrad (20) mittels einer zweiten formschlüssigen Verbindung (24) gegen ein Abheben von der Schienenbahn (10) gesichert ist.

5. Dachanordnung nach Anspruch 4, wobei das Abrollrad (20) ein rotationssymmetrisches, zur Mantelfläche hin offenes U-förmiges Profil (21) oder einen einzelnen Kranz am Umfang aufweist, wobei das U-förmige Profil (21) den Schienenkopf (11) und einen Steg (12) der Schienenbahn (10) beidseits umgreift oder der Kranz einseitig angreift.

6. Dachanordnung nach Anspruch 5, wobei der zweite Formschluss durch eine evolventenförmige Ausnehmung (16) in dem Steg (12) der Schienenbahn (10), in die ein in dem U-förmigen Profil (21) oder dem Kranz und parallel zur Achse (28) des Abrollrads (20) zur Schienenbahn (10) hin abragend angeordneter Stift (26) eingreift, hergestellt wird.

7. Dachanordnung nach einem der vorherigen Ansprüche, wobei eine Traverse (40) vorgesehen ist, die die Abrollräder (20) in ihrer Rotationsachse miteinander verbindet und sich auf diesen gegen die Schienenbahn (10) abstützt.

8. Dachanordnung nach Anspruch 7, wobei die Traverse (40) mehrfach geteilt ist und jeweils zwei Teile über ein Kreuzgelenk (42) beweglich miteinander verbunden sind.

9. Dachanordnung nach einem der vorherigen Ansprüche, wobei das bewegliche Dachteil (2) eine Dacheindeckung (4) umfasst.

10. Dachanordnung nach Anspruch 9, wobei die Dacheindeckung (4) mit jeweils einem passiven Dachteil (3) an einer Langseite gelenkig verbunden ist, so dass bei waagerechter Stellung der Dacheindeckung (4) in der Dachebene (30) die Dachanordnung (1) durch flachliegende Dacheindeckung (4) und passive Dachteile (3) vollständig geschlossen ist, bei senkrechter Stellung der Dacheindeckung (4) gegenüber der Dachebene (30) die Dachanordnung (1) durch flachliegende Dacheindeckung (4) und passive Dachteile (3) vollständig geöffnet ist.

11. Dachanordnung nach Anspruch 10, wobei beidseits des Abrollrads (20) von einer Ebene des Abrollrads (20) beabstandete Traversenklammern (29) vorgesehen sind, wobei die Traverse (40) quer zu einer Traversenachse angeordnete Halteelemente (44) für die Dacheindeckung (4) aufweist und wobei das Abrollrad (20), die Traversenklammern (29), die Halteelemente (44) und die Dacheindeckung (4) so beschaffen und zueinander angeordnet sind, dass die Dachteile (2) ohne zusätzliche Krafteinwirkung eine bevorzugte Ausrichtung gegenüber der Schienenbahn (10) einnehmen.

12. Dachanordnung nach einem der Ansprüche 9 bis 11, wobei als die Dacheindeckung (4) und/ oder der passive Dachteil (3) Solarpaneele (4', 3') vorgesehen sind.

13. Dachanordnung nach Anspruch 12, wobei das Abrollrad (20) aus Kunststoff oder einem anderen isolierenden Material gefertigt ist, sodass Elektroenergie, die durch die Solarpaneele (4', 3') erzeugt wird, über gesonderte Leiter abgeführt werden kann.
